Europäisches Patentamt

European Patent Office

Office européen des brevets

(19)

(11) EP 0 902 573 A2

## (12) EUROPÄISCHE PATENTANMELDUNG

(43) Veröffentlichungstag:
17.03.1999 Patentblatt 1999/11

(51) Int. Cl.6: H04L 25/02

(21) Anmeldenummer: 98116121.9

(22) Anmeldetag: 26.08.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 11.09.1997 DE 19739960

(71) Anmelder:
SIEMENS AKTIENGESELLSCHAFT
80333 München (DE)

(72) Erfinder: Moyal, Michael
81735 München (DE)

### (54) Leitungsempfänger mit galavanischer Trennung

(57) Es ist eine Signalregenerierungsschaltung zum Wiedergewinnen eines digitalen Signals aus einem mittels galvanischer Trennung zugeführten Eingangssignal offenbart. Die Schaltung weist zwei Eingangsanschlüsse für das Eingangssignal und einen Ausgangsanschluß für das wiedergewonnene digitale Signal auf. Die Schaltung ist gekennzeichnet durch einen Stromrichtungssensor, der die zwischen den Eingangsanschlüssen herrschende Stromrichtung erfaßt und der Signal entsprechend der zuletzt herrschenden Stromrichtung abgibt. Die Schaltung kann vorteilhaft in Verbindung mit digitalen Schaltungen eingesetzt werden, die an ihren Eingangsanschlüssen eine Potentialtrennung erfordern.

FIG 1

EP 0 902 573 A2

**Beschreibung**

Die Erfindung betrifft eine Schaltung zum Wiedergewinnen eines digitalen Signals aus einem mittels galvanischer Trennung zugeführten Eingangssignal mit zwei Eingangsanschlüssen für das Eingangssignal und einem Ausgangsanschluß für das wiedergewonnene digitale Signal.

Bei der Übertragung von elektrischen Signalen zwischen zwei Systemen A und B gibt es häufig das Erfordernis, daß die Systeme A und B nicht galvanisch miteinander verbunden werden dürfen, das heißt, daß keine direkte metallische Verbindung zwischen den Systemen A und B vorliegen darf. Zur galvanischen Trennung der Systeme A und B, die untereinander Signale austauschen sollen, kommen bei leitungsgebundener Signalübertragung im wesentlichen das Einfügen eines Kondensators in jede der Signalübertragungsleitungen oder der Einsatz eines Übertragers für ein Signalleitungspaar in Frage. Die Koppelelemente Kondensator bzw. Übertrager erlauben demnach die Übertragung von Signalen zwischen den Systemen A und B, ohne diese galvanisch miteinander zu verbinden.

Der Einsatz der Koppelelemente bewirkt jedoch eine Veränderung des Signalverlaufs, so daß bei der Übertragung eines Signals vom System A zum System B im System B eine Einrichtung vorzusehen ist, mit der der ursprünglich vom System A abgegebene Signalverlauf wiedergewonnen werden kann. Dies ist insbesondere bei digitalen Signalen erforderlich, weil die digitalen Signalverarbeitungseinrichtungen im empfangenden System B nur mit definierten Signalstrukturen zuverlässig arbeiten.

Das der Erfindung zugrundeliegende technische Problem besteht daher darin, eine Schaltung anzugeben, mit der ein digitales Signal, das einem Empfängersystem mittels galvanischer Trennung zugeführt wird, aus dem empfangenen Signal wiedergewonnen werden kann.

Dieses Problem wird gelöst mit einer Schaltung mit den Merkmalen von Patentanspruch 1. Bevorzugte Ausführungsformen dieser Schaltung sind in den Unteransprüchen angegeben.

Eine bevorzugte Signalregenerierungsschaltung weist demnach einen Stromrichtungssensor auf, der die zwischen den Eingangsanschlüssen herrschende Stromrichtung erfaßt und ein Signal entsprechend der herrschenden Stromrichtung abgibt. Der Stromrichtungssensor erfaßt dabei die Richtung des Stroms, der zwischen den zwei Eingangsanschlüssen fließt. vorzugsweise weist der Stromrichtungssensor eine Spannungsklemmanordnung und eine Stromspiegelanordnung auf. Die Spannungsklemmanordnung legt die Spannung zwischen den Eingangsanschlüssen auf einen vorbestimmten Maximalwert fest. Die Stromspiegelanordnung erfaßt den zwischen den Eingangsanschlüssen fließenden Strom und führt den erfaßten Stromwert einer Ausgangstreiberanordnung zu, an der das Ausgangssignal abgreifbar ist. Dabei ist besonders bevorzugt, daß die Spannungsklemmanordnung eine erste und eine zweite Reihenschaltung aus jeweils mindestens zwei in gleicher Richtung geschalteter Dioden aufweist. Dabei sind die Dioden der ersten Reihenschaltung in entgegengesetzter Richtung zu den Dioden der zweiten Reihenschaltung geschaltet, und die Reihenschaltungen sind an einem Mittelknoten miteinander verbunden.

In einem besonders bevorzugten Ausführungsbeispiel der Signalregenerierungsschaltung weist die Stromspiegelanordnung des Stromrichtungssensors einen ersten und einen zweiten Stromspiegel auf. Dabei bildet der erste Stromspiegel den Stromfluß durch die Spannungsklemmanordnung in einer ersten Stromflußrichtung ab, und der zweite Stromspiegel bildet den Stromfluß durch die Spannungsklemmanordnung in einer zweiten Stromflußrichtung ab. Es wird darüber hinaus besonders bevorzugt, daß die Stromspiegelanordnung einen dritten und einen vierten Stromspiegel aufweist. Der dritte Stromspiegel ist dabei mit dem Ausgangsstrompfad des ersten Stromspiegels verbunden und der vierte Stromspiegel ist mit dem Ausgangsstrompfad des zweiten Stromspiegels verbunden. Ganz besonders bevorzugt ist eine Ausführung, bei der der Ausgangsstrompfad des dritten Stromspiegels und der Ausgangsstrompfad des vierten Stromspiegels miteinander verbunden sind und die Ausgangstreiberanordnung bilden. Am Verbindungsknoten der Ausgangsstrompfade des dritten und vierten Stromspiegels kann dann das Ausgangssignal abgegriffen werden.

In einer vorteilhaften Ausführungsform der Erfindung ist an dem Mittelknoten der Spannungsklemmanordnung des Stromrichtungssensors ein Bezugspotential zuführbar. Das Bezugspotential ist dabei gegenüber dem Massepotential des Stromrichtungssensors, und damit des signalempfangenden Systems festgelegt. Die Schaltungsstrukturen der Stromspiegelanordnung können dann gegenüber dem Massepotential des empfangenden Systems ausgelegt werden. Vorzugsweise liegt dieses Bezugspotential im Bereich des Schwellenpotentials von CMOS-Transistoren, wenn derartige Transistoren in der Schaltung eingesetzt werden sollen. Es ist bevorzugt, die Schaltung aus bipolaren Transistoren und CMOS-Transistoren aufzubauen.

Vorzugsweise wird das Eingangssignal mittels kapazitiver Kopplung zugeführt. Schließlich ist bevorzugt, daß der Stromrichtungssensor einen Zwischenspeicher, vorzugsweise in Form eines Flipflops, aufweist, mit dem der zuletzt herrschende Stromrichtungszustand zwischengespeichert wird.

Weitere Vorteile, Merkmale und Anwendungsmöglichkeiten der vorliegenden Erfindung ergeben sich aus der nachfolgenden Beschreibung eines Ausführungsbeispiels in Verbindung mit der Zeichnung. In der Zeichnung zeigen:

Figur 1 ein bevorzugtes Ausführungsbeispiel der Signalregenerierungsschaltung gemäß der Erfindung und

Figur 2 eine Schaltung zur Erzeugung eines Bezugspotentials.

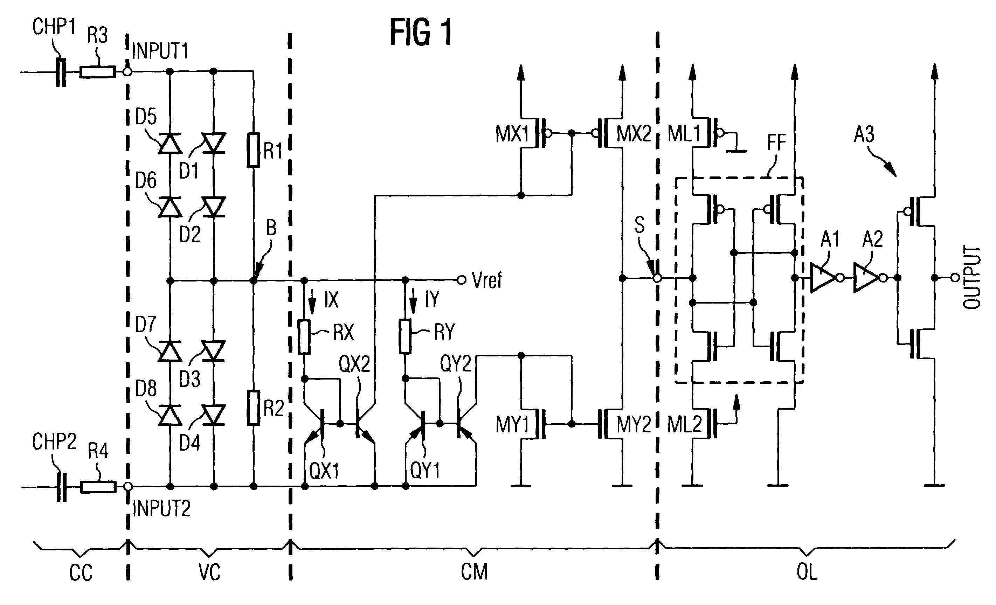

Figur 1 ist im wesentlichen in vier Schaltungsblöcke unterteilt. Ein Schaltungsblock CC betrifft die kapazitive Kopplung zweier Signalleitungen. Schaltungsblöcke VC, CM und OL bilden zusammen einen Stromrichtungssensor gemäß einem bevorzugten Ausführungsbeispiel der Erfindung. Der Stromrichtungssensor nach Figur 1 weist eine Spannungsklemmanordnung VC, eine Stromspiegelanordnung CM und eine Zwischenspeicheranordnung OL auf. Über die kapazitive Kopplung CC wird dem Stromrichtungssensor ein typischerweise differentielles Eingangssignal zugeführt, das vom Stromrichtungssensor ausgewertet und an seinem Ausgangsanschluß OUTPUT als wiedergewonnenes Eingangssignal ausgegeben wird. Die kapazitive Kopplungsanordnung weist dazu in jeder der Signalleitungen jeweils einen Koppelkondensator CHP1 und CHP2 sowie jeweils einen dazu in Reihe geschalteten Widerstand R3 bzw. R4 auf. Die freien Anschlüsse der Widerstände R3 bzw. R4 sind mit den Eingangssignalanschlüssen INPUT1 bzw. INPUT2 der Spannungsklemmanordnung VC des Stromrichtungssensors verbunden.

Die Spannungsklemmanordnung weist zwei antiparallel geschaltete Diodenreihen D1, D2, D3, D4 bzw. D5, D6, D7, D8 auf, die an ihren freien Enden mit den Eingangssignalanschlüssen INPUT1 bzw. INPUT2 verbunden sind. Parallel zu den Diodenreihenschaltungen ist eine Reihenschaltung aus Widerständen R1 und R2 geschaltet, deren freie Enden ebenfalls an den Signaleingangsanschlüssen INPUT1 bzw. INPUT2 angeschlossen sind. Die beiden Diodenreihenschaltungen und die Widerstandsreihenschaltung sind an einem Mittelknoten B untereinander verbunden. Der Mittelknoten B liegt auf einem gegenüber dem Massepotential des empfangenden Systems festgelegten Bezugspotential Vref. Damit liegen die Signaleingangsanschlüsse INPUT1 bzw. INPUT2 gegenüber dem Massepotential des empfangenden Systems, dem der Stromrichtungssensor angehört, um zwei Diodendurchlaßspannungen $V_D$ über bzw. unter der Bezugsspannung Vref. Die Dioden D1 bis D8 sind in einer integrierten Schaltung vorzugsweise als bipolare Transistoren ausgebildet, deren Kollektor und Basis kurzgeschlossen sind und damit in der integrierten Schaltung in einfacher Weise die Funktion einer Diode nachbilden.

In der Stromspiegelanordnung CM des Stromrichtungssensors sind die Eingangsstrompfade eines ersten und eines zweiten Stromspiegels zwischen dem Mittelknoten B und dem Knoten des Eingangssignalanschlusses INPUT2 geschaltet. Der Eingangsstrompfad des ersten Stromspiegels weist einen Widerstand RX und einen zu einer Diode kurzgeschlossenen bipolaren Transistor QX1 vom npn-Typ auf. Der Eingangsstrompfad des ersten Stromspiegels ist somit in der gleichen Durchlaßrichtung geschaltet, wie die Diodenreihenschaltung D1 bis D4. Der Eingangsstrompfad des zweiten Stromspiegels weist einen Widerstand RY und einen als Diode kurzgeschlossenen bipolaren Transistor QY1 vom pnp-Typ auf. Somit weist der Eingangsstrompfad des zweiten Stromspiegels die gleiche Durchlaßrichtung wie die Diodenreihenschaltung D5 bis D8 auf. Der Maximalstrom IX durch den Eingangsstrompfad des ersten Stromspiegels und der Maximalstrom durch den Eingangsstrompfad des zweiten Stromspiegels sind dem Betrag nach gleich. Die Stromrichtung ist jedoch entsprechend der Diodenschaltrichtung entgegengesetzt. Dem Betrag nach sind:

$$|IX|=|IY|=(2V_D-V_{BE})/RX,$$

wobei $V_D$ die Durchlaßspannung einer Diode der Diodenreihenschaltungen D1 bis D8 ist und wobei $V_{BE}$ die Basis-Emitter-Spannung des Transistors QX1 bzw. QY1 ist. Da $V_D \approx V_{BE} \approx 0,7$ V ergibt sich:

$$|IX|=|IY|=0,7 \text{ V}/RX,$$

wobei aus Symmetriegründen die Widerstände RX und RY gleich dimensioniert werden und sich somit gleiche Strombeträge für IX und IY ergeben.

Im Ausgangsstrompfad des ersten Stromspiegels liegt die Kollektor-Emitter-Strecke eines npn-Transistors QX2, und im Ausgangsstrompfad des zweiten Stromspiegels liegt die KollektorEmitter-Strecke eines pnp-Transistors QY2. Die Basisanschlüsse und die Emitteranschlüsse der Transistoren QX1 und QX2 sowie der Transistoren QY1 und QY2 sind miteinander verbunden, um einen Stromspiegel zu bilden. Der Ausgangsstrompfad des ersten Stromspiegels ist mit dem Eingangsstrompfad eines dritten Stromspiegels verbunden und der Ausgangsstrompfad des zweiten Stromspiegels ist mit dem Eingangsstrompfad eines vierten Stromspiegel verbunden. Im Eingangsstrompfad des dritten Stromspiegels liegt die Laststrecke eines p-Kanal-MOS-Transistors MX1. Das freie Ende der Laststrecke des Transistors MX1 ist mit dem Versorgungsspannungsanschluß des empfangenden Systems verbunden. Darüber hinaus ist der Gate-Anschluß des Transistors MX1 mit dem Verbindungsknoten der Transistoren QX2 und MX1 verbunden. In ähnlicher Weise ist der Ausgangsstrompfad des zweiten Stromspiegels mit dem Eingangsstrompfad eines vierten Stromspiegels verbunden. Im Eingangsstrompfad des vierten Stromspiegels liegt die Laststrecke eines n-Kanal-MOS-Transistor MY1, wobei das freie Ende der Laststrecke mit dem Massepotential des empfangenden Systems verbunden ist. Der Gate-Anschluß des Transistors MY1 ist mit dem Verbindungsknoten der Transistoren QY2 und MY1 verbunden.

Der Ausgangsstrompfad des dritten Stromspiegels wird von einem p-Kanal-MOS-Transistor MX2 gebildet, und der Ausgangsstrompfad des vierten Stromspiegels wird von der Laststrecke eines n-Kanal-MOS-Transistors MY2 gebildet. Das freie Ende der Laststrecke des Transistors MX2 ist mit dem Versorgungsspannungsanschluß des empfangenden Systems verbunden und das freie Ende der Laststrecke des Transistors MY2 ist mit dem Masseanschluß des empfangenden Systems verbunden. Die Gate-Anschlüsse dere Transitoren MX1 und MX2 sowie der Transitoren MY1 und MY2 sind miteinander verbunden, um einen Stromspiegel zu bilden. Die Laststrecken der Transistoren MX2 und MY2 des dritten und vierten Stromspiegels sind untereinander an einem Knoten S verbunden. Am Knoten S kann ein logisches Signal abgegriffen werden, das die momentan vorherrschende Stromrichtung zwischen den Eingangsanschlüssen INPUT1 und INPUT2 anzeigt.

Der Stromspiegelanordnung CM ist die Ausgangszwischenspeicheranordnung OL nachgeschaltet, mit der das Ausgangssignal am Knoten S der Stromspiegelanordnung CM stabilisiert wird. Die Ausgangszwischenspeicherschaltung OL weist ein aus CMOS-Invertern bestehendes Flipflop FF auf, dessen Eingangsanschluß mit dem Ausgangsknoten S der Stromspiegelanordnung CM verbunden ist. Einer der Inverter des Flipflops FF weist darüber hinaus Lasttransistoren ML1 und ML2 auf, die ebenfalls in komplementärer MOS-Technik konfiguriert sind. Am Ausgangsanschluß des Flipflops sind drei in Serie geschaltete Inverter A1, A2 und A3 angeschlossen, wobei der Inverter A3 als CMOS-Ausgangstreiber konfiguriert und dimensioniert ist.

Am Ausgangsanschluß des Inverters A3 ist das Ausgangssignal OUTPUT der Signalregenerierungsschaltung der Erfindung abgreifbar.

Die Spannungsklemmanordnung mit den antiparallel geschalteten Diodenreihenschaltungen D1 bis D4 bzw. D5 bis D8 klemmt die Spannung zwischen den Signaleingangsanschlüssen INPUT1 und INPUT2 auf einen Wert, der betragsmäßig das Vierfache einer Diodendurchlaßspannung $V_D$ ist. Bezogen auf den Mittelknoten B bewegt sich die Spannung am Signaleingangsanschluß INPUT2 die Spannung zwischen Vref + 2 $V_D$ und Vref - 2 $V_D$ bezogen auf das Massepotential des empfangenden Systems. Es sollte dabei erwähnt werden, daß bei einem an den Kondensatoren CHP1 und CHP2 anliegenden, rechteckförmigen, differentiellen Eingangssignal sich die Kondensatoren CHP1 und CHP2 über die Widerstände R1 bzw. R2 nach jedem Spannungspegelwechsel im Eingangssignal exponentiell entladen. Die Stromrichtung des Entladestroms bestimmt dabei den logischen Zustand des Eingangssignals. Dabei wird eine erste Stromrichtung im Eingangsstrompfad des ersten Stromspiegels erfaßt, und die zweite Stromrichtung wird im Eingangsstrompfad des zweiten Stromspiegels erfaßt. Obwohl nach Figur 1 die Eingangsstrompfade des ersten und zweiten Stromspiegels zwischem dem Mittelknoten B und dem Knoten des Eingangsanschlusses INPUT2 geschaltet sind, ist die Schaltungsfunktion bei nur geringfügig anderer Konfiguration auch dann realisierbar, wenn der Eingangsstrompfad des ersten oder zweiten Stromspiegels oder des ersten und zweiten Stromspiegels zwischen dem Mittelknoten B und dem Knoten des Eingangsanschlusses INPUT1 geschaltet ist.

Der Strom IX im Eingangsstrompfad des ersten Stromspiegels wird in seinen Ausgangsstrompfad abgebildet und gleichzeitig dem Eingangsstrompfad des dritten Stromspiegels zugeführt. In ähnlicher Weise wird der Strom IY im Eingangsstrompfad des zweiten Stromspiegels in seinen Ausgangsstrompfad abgebildet und dem Eingangsstrompfad des vierten Stromspiegels zugeführt. Da jeweils zu einem bestimmten Zeitpunkt entweder nur der erste oder nur der zweite Stromspiegel aktiv ist, können die Ausgangsstrompfade des dritten und vierten Stromspiegels miteinander verbunden werden, um am Verbindungsknoten S das Ausgangssignal abzugreifen.

Wenn beispielsweise ein negatives Eingangssignal vorliegt, das heißt die Spannungsdifferenz zwischen dem Eingangsanschluß INPUT1 und dem Eingangsanschluß INPUT2 ist negativ und es fließt ein Strom vom Eingangsanschluß INPUT2 zum Eingangsanschluß INPUT1, so liegt am Eingangsanschluß INPUT2 eine Spannung, die um das zweifache einer Diodendurchlaßspannung $V_D$ über der Bezugsspannung Vref bezogen auf das Massepotential des empfangenden Systems liegt. Es fließt somit ein wie oben berechneter Strom IY durch den Eingangsstrompfad des zweiten Stromspiegels. Dieser Strom IY wird auf den Ausgangsstrompfad des zweiten Stromspiegels abgebildet, vom vierten Stromspiegel vervielfacht und über den Knoten S an das Flipflop FF angelegt, um dieses in seinem Zustand umzuschalten. Das Flipflop schaltet somit entsprechend der gerade vorherrschenden Stromrichtung zwischen den Eingangsanschlüssen INPUT1 und INPUT2. Mit den Lasttransistoren ML1 und ML2 können die Umschaltströme des Flipflops FF eingestellt werden.

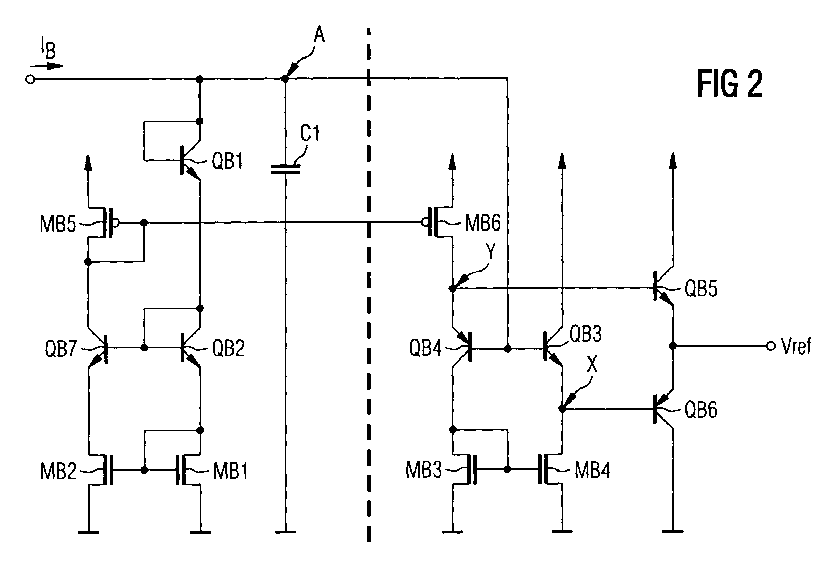

Figur 2 zeigt eine Schaltung zur Erzeugung des Referenzpotentials Vref. Dazu wird an einen Knoten A ein Strom $I_B$ zugeführt, dessen Wert sehr niedrig bemessen ist. Dieser Strom fließt über zu Dioden verschalteten npn-Transistoren QB1 und QB2 und die Laststrecke eines n-Kanal-MOS-Transistors auf den Masseanschluß des empfangenden Systems ab. Dabei entsteht ein Spannungsabfall vom zweifachen der Basis-Emitter-Spannung $V_{BE}$ der Transistoren QB1 und QB2 und der Schwellenspannung VT des MOS-Transistors MB1. Am n-Kanal-MOS-Transistor MB2 wird dieser Strom über die zu einem Stromspiegel verschalteten Transistoren MB1 und MB2 in einen Ausgangsstrompfad abgebildet. Der Ausgangsstrompfad besteht aus der Laststrecke des Transistors MB2, der Kollektor-Emitter-Strecke eines npn-Transistors QB7, der mit dem Transistor QB2 ebenfalls zu einem Stromspiegel verschaltet ist, und der Laststrecke eines p-Kanal-MOS-Transistors MB5. Über den Transistor MB5 wird der Strom im Ausgangsstrompfad der Stromspiegelanordnung auf die Laststrecke eines p-Kanal-MOS-Transistors MB6 abgebildet. Dieser aktiviert einen pnp-Transistor QB4 und treibt eine weitere Stromspiegelanordnung bestehend aus den n-Kanal-MOS-Transistoren MB3 und MB4. Im Ausgangsstrompfad dieses Stromspiegels befindet sich die Laststrecke des Transistors MB4 und die Kollektor-Emitter-Strecke eines npn-Transistors QB3, der dadurch ebenfalls aktiviert ist. An einem Verbindungsknoten Y des Transistors MB6 und des Transistors QB4 ist die Basis eines Ausgangstransistors QB5 vom npn-Typ angeschlossen. An einem Verbindungsknoten X zwischen dem Emitter des Transistors QB3 und der Laststrecke des Transistors MB4 ist die Basis eines Ausgangstransistors QB6 vom pnp-Typ angeschlossen. Die Emitter der Ausgangstransistoren QB5 und QB6 sind untereinander verbunden und liegen auf der gewünschten Spannung Vref.

Die Spannung Vref liegt dabei auf gleicher Höhe wie das Potential am Knoten A. Dies liegt daran, daß die Hasen der Transistoren QB3 und QB4 ebenfalls mit dem Knoten A verbunden sind und die Transistoren QB3 und QB4 von den Stromspiegelanordnungen aus den Transistoren MB3 und MB4 bzw. MB5 und MB6 aktiviert gehalten werden. Somit liegt der Knoten Y um den Spannungsabfall an der Basis-Emitter-Diode des Transistors QB4 über dem Potential des Knotens A. Über den Spannungsabfall an der Basis-Emitter-Diode des Transistors QB5 gelangt man dann wieder zurück zum Potential des Knotens A. Zum gleichen Ergebnis gelangt man vom Knoten A über die BasisEmitter-Strecke des Transistors QB3 zum Knoten X und davon über die Basis-Emitter-Strecke des Transistors QB6 zum Ausgangsanschluß Vref. Durch die Ausgangsstufe aus den Transistoren QB5 und QB6 kann am Ausgangsanschluß die Bezugsspannung Vref mit niedriger Impedanz und push-pull-Fähigkeit abgegriffen werden.

Die Schaltung nach Figur 2 gehört zum empfangenden System und ist demnach auf dessen Massepotential bezogen. Dies trifft ebenfalls auf die in der Figur 2 veranschaulichten Versorgungsspannungsanschlüsse an den freien Enden der Laststrecken der Transistoren MB5, MB6, QB3 und QB5 zu. Zwischen dem Knoten A und dem Massepotential ist darüber hinaus ein Kondensator C1 geschaltet, der hochfrequentes Rauschen aus einer umgebenden Versorgungsspannungsguelle oder Taktsystemguellen herausfiltert. Die Spannung am Knoten A und damit die Ausgangsspannung Vref liegt um das zweifache einer Basis-Emitter-Spannung über der Schwellenspannung eines MOS-Transistors bezogen auf das Massepotential des empfangenden Systems.

Mit der Schaltung nach der Erfindung ist es möglich, ein differentielles Eingangssignal, das über die Koppelkondensatoren CHP1 und CHP2 dem empfangenden System über die Eingangsanschlüsse INPUT1 und INPUT2 zugeführt wird, als solches bezogen auf das Massepotential des empfangenden Systems zu regenerieren und an einem Ausgangsanschluß OUTPUT auszugeben. Zwischen dem Sendesystem und dem empfangenden System fließt demnach kein Gleichstrom, sondern es wird lediglich eine Wechselstromkomponente übertragen. Die erfindungsgemäße Schaltung kann in einfacher Weise vollständig integriert auf einer Halbleiterstruktur aufgebaut werden.

**Patentansprüche**

1.    Signalregenerierungsschaltung zum Wiedergewinnen eines digitalen Signals aus einem mittels galvanischer Trennung (CHP1, CHP2) zugeführten Eingangssignal mit zwei Eingangsanschlüssen (INPUT1, INPUT2) für das Eingangssignal und einem Ausgangsanschluß (OUTPUT) für das wiedergewonnene digitale Signal,
     **gekennzeichnet durch**
     einen Stromrichtungssensor (VC, CM, OL), der die zwischen den Eingangsanschlüssen (INPUT1, INPUT2) herrschende Stromrichtung erfaßt und der ein Signal (OUTPUT) entsprechend der herrschenden Stromrichtung abgibt.

2.    Schaltung nach Patentanspruch 1,
     **dadurch gekennzeichnet,** daß
     der Stromrichtungssensor eine Spannungsklemmanordnung (VC) zum Festlegen der Spannung zwischen den Eingangsanschlüssen (INPUT1, INPUT2) und eine Stromspiegelanordnung (CM), die eine Ausgangstreiberanordnung (MX2, MY2) umfaßt, aufweist, wobei das Ausgangssignal (OUTPUT) an der Ausgangstreiberanordnung (MX2, MY2) abgreifbar ist.

3.    Schaltung nach Patentanspruch 2,
     **dadurch gekennzeichnet,** daß
     die Spannungsklemmanordnung (VC) eine erste (D1, D2, D3, D4) und eine zweite (D5, D6, D7, D8) Reihenschaltung aus jeweils mindestens zwei in gleicher Richtung geschalteter Dioden aufweist, wobei die Dioden der ersten Reihenschaltung (D1, D2, D3, D4) in entgegengesetzter Richtung zu den Dioden der zweiten Reihenschaltung (D5, D6, D7, D8) geschaltet sind und die Reihenschaltungen an einem Mittelknoten miteinander verbunden sind.

4.    Schaltung nach einem der Patentansprüche 2 oder 3,
     **dadurch gekennzeichnet,** daß
     die Stromspiegelanordnung (CM) einen ersten (QX1, QX2, RX) und einen zweiten (QY1, QY2, RY) Stromspiegel aufweist, wobei der erste Stromspiegel (QX1, QX2, RX) den Stromfluß (IX) durch die Spannungsklemmanordnung (VC) in einer ersten Stromflußrichtung abbildet und der zweite Stromspiegel (QY1, QY2, RY) den Stromfluß (IY) durch die Spannungsklemmanordnung (VC) in einer zweiten Stromflußrichtung abbildet.

5. Schaltung nach Patentanspruch 4,
   **dadurch gekennzeichnet,** daß
   die Stromspiegelanordnung (CM) einen dritten (MX1, MX2) und einen vierten (MY1, MY2) Stromspiegel aufweist, wobei der dritte Stromspiegel (MX1, MX2) mit dem Ausgangsstrompfad des ersten Stromspiegels (QX1, QX2, RX) verbunden ist und der vierte Stromspiegel (MY1, MY2) mit dem Ausgangsstrompfad des zweiten Stromspiegels (QY1, QY2, RY) verbunden ist.

6. Schaltung nach Patentanspruch 5,
   **dadurch gekennzeichnet,** daß
   der Ausgangsstrompfad des dritten Stromspiegels (MX1, MX2) und der Ausgangsstrompfad des vierten Stromspiegels (MY1, MY2) miteinander verbunden sind und die Ausgangstreiberanordnung (MX2, MY2) bilden, wobei am Verbindungsknoten (S) der Ausgangsstrompfade des dritten und vierten Stromspiegels das Ausgangssignal abgegriffen werden kann.

7. Schaltung nach einem der Patentansprüche 2 bis 6,
   **dadurch gekennzeichnet,** daß
   an dem Mittelknoten der Spannungsklemmanordnung (VC) ein Hezugspotential (Vref) zuführbar ist.

8. Schaltung nach einem der Patentansprüche 7,
   **dadurch gekennzeichnet,** daß
   das Bezugspotential (Vref) im Bereich des Schwellenpotentials (VT) der in einer integrierten Schaltung verwendeten CMOS-Transistoren liegt.

9. Schaltung nach einem der vorhergehenden Patentansprüche,
   **dadurch gekennzeichnet,** daß
   die Schaltung aus Bipolaren Transistoren und CMOS Transistoren aufgebaut ist.

10. Schaltung nach einem der vorhergehenden Patentansprüche,
    **dadurch gekennzeichnet,** daß
    das Eingangssignal mittels kapazitiver Kopplung (CHP1, CHP2) zugeführt ist.

11. Schaltung nach einem der vorhergehenden Patentansprüche,
    **dadurch gekennzeichnet,** daß
    der Stromrichtungssensor (VC, CM, OL) einen Zwischenspeicher (OL) aufweist, mit dem der zuletzt herrschende Stromrichtungszustand zwischengespeichert wird.

FIG 1

FIG 2

EP 0 902 573 A2